# EUROPÄISCHE PATENTANMELDUNG

(11) **EP 1 262 303 A1**
(43) Veröffentlichungstag der Anmeldung: **04.12.2002**
(21) Anmeldenummer: 02405409.0
(22) Anmeldetag: 23.05.2002
(51) Int. Cl.: B29C 47/60

(54) **Arbeitsorgan für eine Misch-und/oder Knet- und/oder Fördereinrichtung**

(30) Priorität: 28.05.2001 CH 9792001
(71) Anmelder: Coperion Buss AG, 4133 Pratteln 1 (CH)
(72) Erfinder: Franz, Peter, 4127 Birsfrelden (CH); Henschel, Werner, 4304 Giebenach (CH)
(74) Vertreter: Rottmann, Maximilian R.

(57) **Zusammenfassung**

Es wird ein modular aufgebautes Arbeitsorgan (17) für eine Misch- und/oder Kneteinrichtung vorgeschlagen. Die zur Bildung des Arbeitsorgans (17) vorgesehenen Module (1, 18) sind im wesentlichen hohlzylindrisch ausgebildet und mit einer Vielzahl von Misch-, Knet- oder Förderorganen (5) versehen. Zur Führung dieser Module (1, 18) dient ein zentrales Führungsorgan (19), welches zudem Mittel zum axialen Verspannen der Module (1, 18) aufweist. Die Module (1, 18) sind mit klauenartigen Vorsprüngen (10, 10a) versehen, welche in korrespondierende Ausnehmungen (12, 12a) im benachbarten Modul (1, 18) einzugreifen bestimmt sind. Im weiteren ist ein auf das Führungsorgan (19) aufgeschobenes Anfangsmodul (20) vorgesehen, welches direkt oder indirekt mit einem Getriebe und/oder Antriebsmotor und auf der anderen Seite kraftschlüssig mit einem nachfolgenden Modul (18a) verbunden ist. Dadurch können die für den Betrieb des Arbeitsorgans (17) notwendigen Antriebskräfte direkt vom Getriebe bzw. Antriebsmotor auf die das Arbeitsorgan bildenden Module (1, 18, 18a, 20) übertragen werden.

## Beschreibung

Die Erfindung betrifft ein nach dem Oberbegriff des Anspruchs 1 ausgebildetes Arbeitsorgan für eine Misch- und/oder Knet- und/oder Fördereinrichtung.

Als gattungsgemässe Misch- und/oder Knet- und/oder Fördereinrichtungen können beispielsweise ein Schneckenextruder oder der Buss KO-KNETER® angeführt werden. Da die grundsätzliche Gestaltung und Wirkungsweise derartiger Misch- und/oder Knet - und/oder Fördereinrichtungen bekannt ist, braucht an dieser Stelle nicht näher darauf eingegangen zu werden.

Aus der EP 0 532 903 ist eine Knetmaschine bekannt, die mit einem rotierenden Arbeitsorgan versehen ist. Dieses Arbeitsorgan besteht aus einem hinteren, mit einer Schnecke versehenen Abschnitt und einem vorderen, im Durchmesser reduzierten und ebenfalls mit einer Schnecke versehenen Abschnitt. Zwischen diesen beiden Abschnitten sind mehrere Scheiben angeordnet, zwischen denen wiederum Schneckenelemente aufgenommen sind. Die Scheiben und die Schneckenelemente sind auf das Arbeitsorgan aufgeschoben. Um eine kraftschlüssige Verbindung zwischen dem Arbeitsorgan und den Scheiben bzw. Schneckenelementen zu gewährleisten, sind Keilverbindungen vorgesehen. Es versteht sich, dass ein derartiges Arbeitsorgan sehr aufwendig zu fertigen und entsprechend teuer in der Herstellung ist.

Zudem weisen Keilverbindungen den grundsätzlichen Nachteil auf, dass sie den in Bezug auf eine Drehmomentübertragung massgebenden Querschnitt der sie tragenden Welle schwächen. Dies trifft natürlich ebenso auf andere Verbindungen wie beispielsweise Evolventenverzahnungen zu.

Aus der DE 43 19 058 ist eine Schneckenwelle bekannt, die mehrere auf eine runde Welle aufgeschobene Schneckenelemente aufweist. Die Schneckenelemente sind axial gegeneinander verspannt und mit schrägen oder gestuften, zueinander korrespondierenden Stirnflächen versehen. Durch diese Ausbildung werden die einzelnen Schneckenelemente formschlüssig unverdrehbar aneinander gehalten. Der Vorteil dieser Schneckenwelle wird darin gesehen, dass auf eine formschlüssige Verbindung zwischen der Welle und den Schneckenelementen verzichtet werden kann und dass die einzelnen Schneckenelemente rasch ausgetauscht werden können. Allerdings ist dieser Schrift kein Hinweis zu entnehmen, wie die Krafteinleitung vom Antriebsaggregat auf die Welle bzw. die Schneckenelemente erfolgen soll.

Aus der DE 44 44 370 ist eine aus mehreren Segmenten bestehende Extruderwelle bekannt. Die einzelnen Segmente sind mit Längsbohrungen bzw. Sacklochbohrungen zur Aufnahme von Schraubenbolzen versehen, mittels welchen die Segmente miteinander verbunden werden. Die Längs- bzw. Sacklochbohrungen erweitern sich endseitig zu einem Aufnahmeraum, in welchem jeweils die eine Hälfte einer Führungsbuchse aufgenommen werden kann. Diese Führungsbuchsen dienen dem radialen Ausrichten der einzelnen Segmente und dem Aufteilen des Drehmoments in Teilkräfte.

Schliesslich ist aus der DE 37 14 506 eine formschlüssige Verbindung zweier koaxialer Wellenteile bekannt. Dazu wird vorgeschlagen, in den sich gegenüberliegenden Stirnseiten zweier Wellenteile Bohrungen vorzusehen, in die Bolzen eingesetzt werden.

Ausgehend vom bekannten Stand der Technik besteht die Aufgabe der Erfindung darin, die im Oberbegriff des Anspruchs 1 beschriebene Misch- und/oder Knet- und/oder Fördereinrichtung derart zu gestalten, dass diese schnell und einfach mit dem Getriebe und/oder Antriebsmotor verbunden werden kann, wobei eine möglichst direkte Krafteinleitung vom Getriebe und/oder Antriebsmotor auf die einzelnen Module des Arbeitsorgans ermöglicht werden soll.

Diese Aufgabe wird durch die im Kennzeichen des Anspruchs 1 angeführten Merkmale gelöst.

Bevorzugte Ausführungsformen der Erfindung sind in den abhängigen Ansprüchen 2 bis 12 umschrieben.

Nachfolgend wird ein Ausführungsbeispiel der Erfindung anhand von Zeichnungen näher erläutert. Dabei zeigt:
Fig. 1 eine Seitenansicht eines einzelnen Moduls zur Bildung des Arbeitsorgans;
Fig. 2 eine Ansicht auf die eine Stirnseite des Moduls gemäss Fig. 1;
Fig. 3 eine Ansicht auf die andere Stirnseite des Moduls gemäss Fig. 1;
Fig. 4 zwei Module in der Abwicklung;
Fig. 5 die beiden Module gemäss Fig. 4 in zusammengefügtem Zustand;
Fig. 6 eine perspektivische Ansicht von zwei zusammengefügten und auf ein Führungsorgan aufgeschobenen Modulen, und
Fig. 7 das Führungsorgan zusammen mit den das Arbeitsorgan bildenden Modulen in einem Längsschnitt.

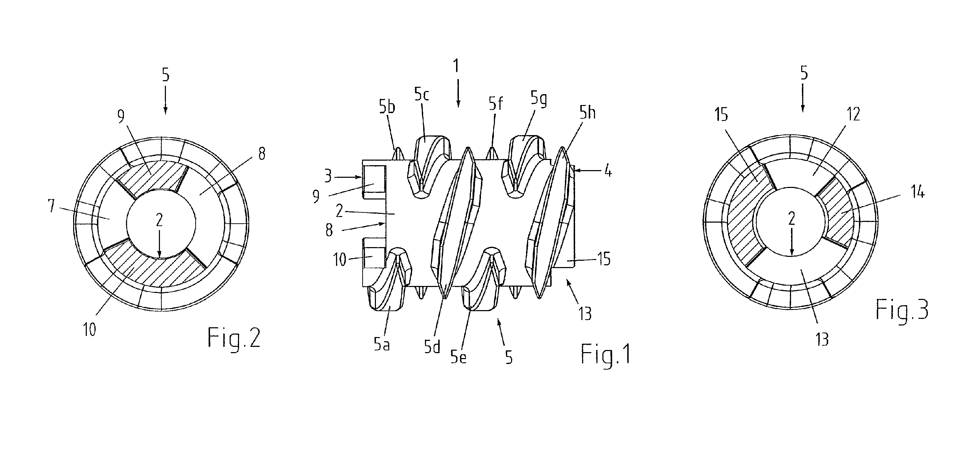

Die Figuren 1 bis 3 zeigen ein einzelnes Modul 1 zur Bildung eines Arbeitsorgans "Misch- und Knetorgan" in einer Seitenansicht (Fig. 1), in einer Ansicht auf die linke Stirnseite (Fig. 2) und in einer Ansicht auf die rechte Stirnseite (Fig. 3). Das Modul 1 ist mit einem im wesentlichen hohlzylindrisch gestalteten Grundkörper 2 versehen, an dessen Aussenseite eine Vielzahl von Misch- und Knetflügeln angeordnet sind, welche gesamthaft mit 5 bezeichnet sind. Derartige Module können beispielsweise aus vollem Material durch Materialabtrag oder durch Giessen gefertigt werden.

Beide Stirnseiten 3, 4 des Moduls 1 sind mit je zwei kreisringabschnittförmig gestalteten Ausnehmungen 7, 8; 12, 13 und je zwei die Ausnehmungen 7, 8; 12, 13 begrenzenden, kreisringabschnittförmig gestalteten Vorsprüngen 9, 10; 14, 15 versehen, wobei sowohl die Ausnehmungen 7, 8; 12, 13 wie auch die Vorsprünge 9, 10; 14, 15 jeder Stirnseite unterschiedlich lang sein können. Die Vorsprünge 9, 10; 14, 15 sind zugunsten einer besseren Übersicht schraffiert dargestellt. Die längeren Vorsprünge 10, 15 erstrecken sich um ca. 120° über den Kreisumfang und sind korrespondierend zu den längeren Ausnehmungen 8, 13 ausgebildet. Die kürzeren Vorsprünge 9, 14 erstrecken sich um ca. 60° über den Kreisumfang und sind korrespondierend zu den kürzeren Ausnehmungen 7, 12 ausgebildet. Auf diese Weise können mehrere Module zu einem Arbeitsorgan zusammengefügt werden, wobei der jeweilige Vorsprung 9, 10; 14, 15 praktisch spielfrei in die entsprechende Ausnehmung 7, 8; 12, 13 im benachbarten Element einzugreifen bestimmt ist, so dass eine form- und kraftschlüssige Verbindung zwischen den einzelnen Modulen zum Übertragen von Drehmomenten entsteht, wie nachfolgend anhand der Fig. 6 noch gezeigt werden wird.

Der in axialer Richtung gesehen erste Misch- und Knetflügel 5a erstreckt sich bis auf den längeren Vorsprung 10 auf der linken Stirnseite 3 des Moduls 1 hinaus, währenddem sich der in axialer Richtung gesehen letzte Misch- und Knetflügel 5h auf den längeren Vorsprung 15 auf der rechten Stirnseite 4 des Moduls 1 hinaus erstreckt.

Indem die Vorsprünge 9, 10; 14, 15 bzw. Ausnehmungen 7, 8; 12, 13 unterschiedliche Bogenlängen aufweisen, können die Module nur in einer einzigen Stellung zusammengefügt werden. Dies hat beispielsweise den Vorteil, dass die Misch- und Knetflügel derart aufeinander abgestimmt werden können, dass eine quasi fortlaufende Schneckenwelle bzw. Schneckenwellenreihe gebildet wird, die sich über die einzelnen Module hinweg erstreckt. Die Vorsprünge 9, 10; 14, 15 bzw. Ausnehmungen 7, 8; 12, 13 können natürlich auch in axialer Richtung unterschiedlich lang ausgebildet sein.

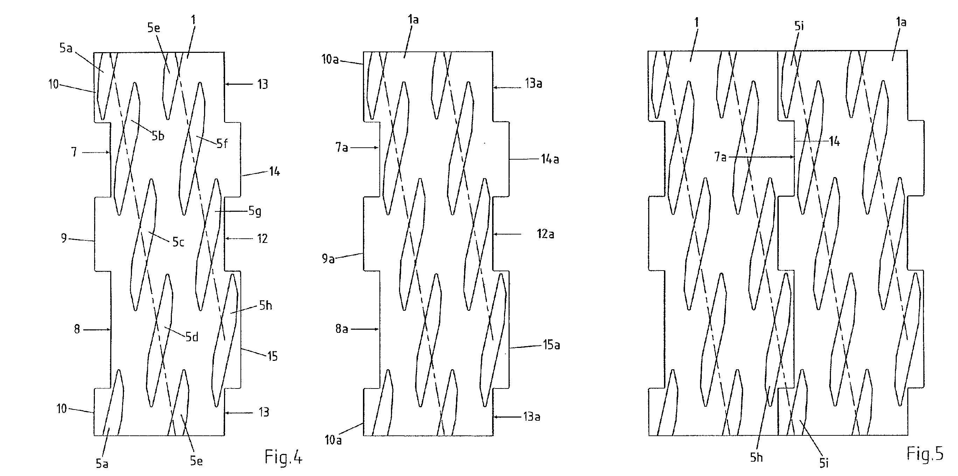

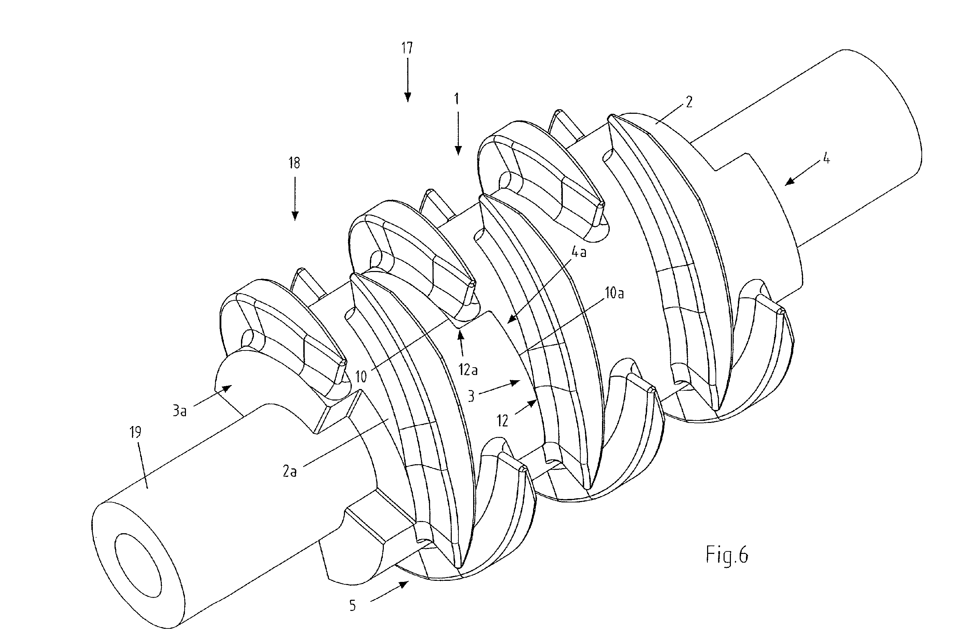

In der Fig. 4 sind zwei Module 1, 1a in einer Abwicklung dargestellt. Aus dieser Darstellung sind die Ausnehmungen 7, 8; 12, 13 sowie die Vorsprünge 9, 10; 14, 15 ersichtlich, welche beim rechten Modul 1a jeweils mit dem gleichen Bezugszeichen aber mit dem Zusatz a versehen sind. Wenn die beiden Module 1, 1a zusammengefügt sind, wie dies aus der Fig. 5 ersichtlich ist, greifen die Vorsprünge in die Ausnehmungen ein und es entsteht eine fortlaufende Schneckenwellenreihe, die sich über beide Module 1, 1a hinweg erstreckt wie dies anhand der zwei benachbarten Misch- und Knetflügel 5h und 5i ersichtlich ist, wobei sich der eine Mischflügel 5h auf dem ersten Modul 1 und der andere Mischflügel 5i auf dem sich anschliessenden Modul 1a befindet.

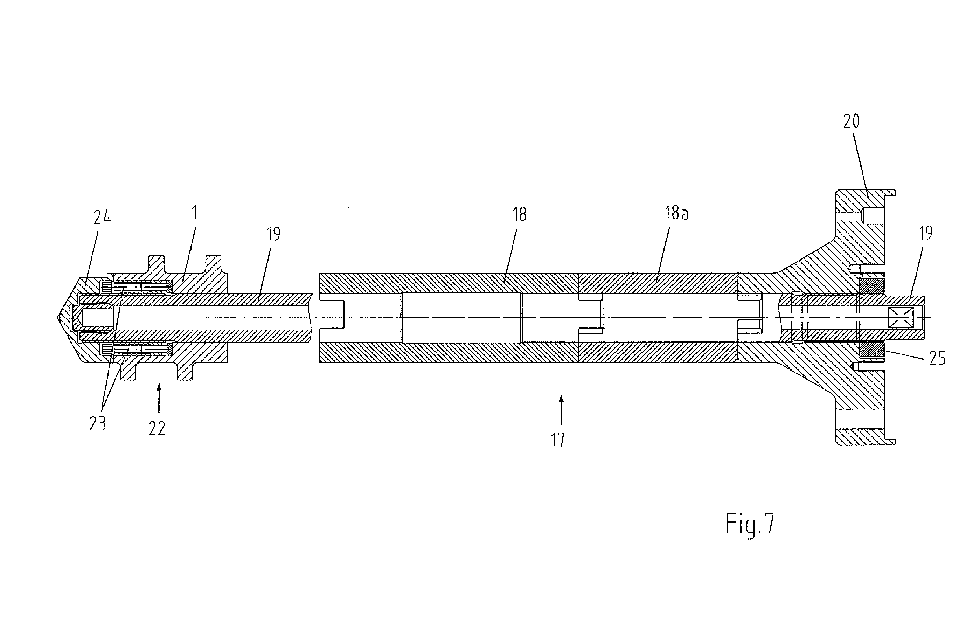

Figur 6 zeigt in einer perspektivischen Ansicht zwei auf ein zentrales Führungsorgan 19 aufgeschobene Module 1, 18, welche zusammen einen Teil eines Arbeitsorgans 17 bilden. Im vorliegenden Fall ist das linke Modul 18, in axialer Richtung gesehen, kürzer ausgebildet als das rechte Modul 1. Das als Welle ausgebildete Führungsorgan 19 dient sowohl der Führung der Module 1, 18 wie auch dem axialen Verspannen derselben, was nachfolgend anhand der Figur 7 noch näher erläutert wird. Die beiden gezeigten Module 1, 18 sind hier stellvertretend für eine Vielzahl von weiteren Modulen, die gesamthaft das Arbeitsorgan 17 bilden, dargestellt. Der Aussendurchmesser des Führungsorgans 19 ist dabei auf den Innendurchmesser der hohlzylindrisch ausgebildeten Module 1, 18 abgestimmt.

Fig. 7 zeigt das zentrale Führungsorgan 19 zusammen mit einigen schematisch dargestellten und auf das Führungsorgan 19 aufgeschobenen Modulen 1, 18, 18a, 20 in einem Längsschnitt. Die auf das Führungsorgan 19 aufgeschobenen Module 1, 18, 18a, 20 bilden zusammen das Arbeitsorgan 17. Auf der rechten Seite ist ein Anfangsmodul 20 auf das Führungsorgan 19 aufgeschoben. Dieses Anfangsmodul 20 wird mit einem nicht dargestellten Getriebe und Antriebsmotor gekoppelt und dient dem Übertragen von Antriebsmomenten. Dieses Anfangsmodul 20 ist in der vorgängig beschriebenen Weise form- und kraftschlüssig mit dem angrenzenden Modul 18a verbunden, indem die dem angrenzenden Modul 18a zugewandte Stirnseite des Anfangsmoduls 20 mit der Stirnseite des angrenzenden Moduls 18a korrespondiert. Auf die dem Getriebe bzw. Antriebsmotor zugewandte Seite hin vergrössert sich das Anfangsmodul 20 im Durchmesser. Auf der rechten Seite des Führungsorgans 19 ist eine Mutter 25 aufgeschraubt, welche als rechter Anschlag für das Anfangsmodul 20 dient.

Zum axialen Verspannen der das Arbeitsorgan bildenden Module 1, 18, 18a, 20 ist auf der linken Seite des Führungsorgans 19 ein sogenannter "Superbolt" Spannmechanismus 22 angeordnet, der eine Vielzahl von Spannschrauben 23 aufweist, mittels denen die Module 1, 18, 18a axial gegen das an der Mutter 25 axial abgestützte Anfangsmodul 20 verspannt werden können. Das Anfangsmodul 20 bildet dabei den endseitigen Anschlag für die übrigen Module 1, 18, 18a. Am linken Ende des Führungsorgans 19 ist eine Abdeckmutter 24 vorgesehen. Das Führungsorgan 19 kann auf der Innenseite hohl ausgebildet sein für die Aufnahme eines fluiden Wärmeträgers zur Bildung eines Zirkulationssystems. Die zum Koppeln des Anfangsmoduls 20 notwendigen Mittel wie beispielsweise Schrauben sind nicht näher dargestellt.

Es versteht sich, dass anstelle des gezeigten "Superbolt" Spannmechanismus 22 auch andere Spannvorrichtungen wie beispielsweise eine zentrale Spannmutter, ein vorgespanntes Federpaket, eine hydraulisch oder pneumatisch zu betätigende Vorrichtung und dergleichen zum Einsatz kommen können. Allenfalls könnte auch die Abdeckmutter 24 zum Verspannen der das Arbeitsorgan bildenden Module 1, 18, 18a, 20 vorgesehen werden.

Ebenso können die Stirnseiten der einzelnen Elemente abweichend von dem gezeigten Ausführungsbeispiel gestaltet sein. Denkbar sind beispielsweise Varianten, bei denen die Module mit einer glatten Stirnseite versehen sind und die Kraftübertragung ausschliesslich durch eine Reibschlussverbindung stattfindet. Andererseits sind natürlich ebenso Module denkbar, die mit einer Stirnseitenverzahnung versehen sind. Bei entsprechender Ausbildung der einzelnen Module kann ggf. auch auf ein zentrales Führungsorgan verzichtet werden. Zum axialen Verspannen der Module genügt in diesem Fall ein zentraler Zuganker.

Die in den vorgängigen Ausführungsbeispielen gezeigte Variante mit klauenartigen Erhebungen hat sich jedoch insbesondere in Bezug auf die Herstellungskosten als vorteilhaft erwiesen.

Mit der vorgeschlagenen Ausbildung des Arbeitsorgans ergeben sich eine Reihe von Vorteilen gegenüber konventionell ausgebildeten Arbeitsorganen:
- es wird eine direkte Kraftübertragung vom Getriebe bzw. Antriebsmotor auf die das Arbeitsorgan bildenden Module erreicht;
- der für die Übertragung des Drehmoments zur Verfügung stehende Querschnitt wird nicht geschwächt, sondern es steht der gesamte Querschnitt eines Moduls zur Verfügung;
- durch den modularen Aufbau kann das Arbeitsorgan schnell und einfach an unterschiedliche Aufgaben angepasst werden, indem unterschiedliche Module zusammengefügt werden;
- indem sich zumindest ein Misch- und Knetflügel bis auf einen Vorsprung hinaus erstreckt, kann eine sich über mehrere Module hinweg erstreckende Schneckenwellenreihe oder eine fortlaufende Schneckenwelle gebildet werden;

Natürlich beschränkt sich der Einsatz von erfindungsgemäss gestalteten Arbeitsorganen nicht auf herkömmliche Misch- und/oder Knet- und/oder Fördereinrichtungen sondern sie können grundsätzlich sowohl in diskontinuierlichen Knetern wie beispielsweise Z-Knetern als auch in kontinuierlichen Knetern wie beispielsweise einwelligen Extrudern, Doppelschneckenmaschinen, Vielwellen-Extrudern sowie dem bereits genannten Buss Ko-Kneter zum Einsatz kommen.

## Patentansprüche

1. Arbeitsorgan (17) für eine Misch- und/oder Knet- und/oder Fördereinrichtung, mit einem zentralen Führungsorgan (19) und mehreren, im wesentlichen hohlzylindrisch ausgebildeten Modulen (1, 18, 18a), die auf das Führungsorgan (19) aufgeschoben und mit zumindest einem Misch-, Knet- oder Förderorgan (5) versehen sind, wobei die Module (1, 18, 18a) derart ausgebildet und axial gegeneinander verspannt sind, dass die für den Betrieb des Arbeitsorgans (17) notwendigen Antriebskräfte direkt von einem Modul auf das benachbarte Modul übertragbar sind, **dadurch gekennzeichnet, dass** ein auf das Führungsorgan (19) aufgeschobenes Anfangsmodul (20) vorgesehen ist, welches auf der einen Seite direkt oder indirekt mit einem Getriebe und/oder Antriebsmotor und auf der anderen Seite kraftschlüssig mit einem nachfolgenden Modul (18a) verbunden ist.

2. Arbeitsorgan (17) nach Anspruch 1, **dadurch gekennzeichnet, dass** das Anfangsmodul (20) axial am zentralen Führungsorgan (19) abgestützt ist und einen endseitigen Anschlag für die übrigen Module (1, 18, 18a) bildet, dass die übrigen Module (1, 18, 18a) axial gegen das Anfangsmodul (20) verspannt sind, und dass das Anfangsmodul (20) einen Teil des Arbeitsorgans (17) bildet.

3. Arbeitsorgan (17) nach Anspruch 1 oder 2, **dadurch gekennzeichnet, dass** das zentrale Führungsorgan (19) mit einem Anschlagelement, insbesondere einer auf das zentrale Führungsorgan (19) aufgeschraubten Mutter (25) versehen ist, an welchem sich das Anfangsmodul (20) axial abstützt.

4. Arbeitsorgan (17) nach einem der vorhergehenden Ansprüche, **dadurch gekennzeichnet, dass** das Anfangsmodul (20) auf der dem Getriebe oder Antriebsmotor zugewandten Seite mit Mitteln zum Koppeln am Getriebe oder am Antriebsmotor versehen ist.

5. Arbeitsorgan (17) nach einem der vorhergehenden Ansprüche, **dadurch gekennzeichnet, dass** sich das Anfangsmodul (20) auf die dem Getriebe bzw. Antriebsmotor zugewandte Seite hin im Durchmesser vergrössert.

6. Arbeitsorgan (17) nach einem der vorhergehenden Ansprüche, **dadurch gekennzeichnet, dass** die dem angrenzenden Modul (18a) zugewandte Stirnseite des Anfangsmoduls (20) derart mit der Stirnseite des angrenzenden Moduls (18a) korrespondiert, dass eine kraft- und/oder formschlüssige Übertragung der Antriebskräfte erreichbar ist.

7. Arbeitsorgan (17) nach einem der vorhergehenden Ansprüche, **dadurch gekennzeichnet, dass** das Führungsorgan (19) auf der dem Anfangsmodul (20) abgewandten Seite mit Spannmitteln (22, 23) zum axialen Verspannen der einzelnen Module versehen ist.

8. Arbeitsorgan (17) nach Anspruch 7, **dadurch gekennzeichnet, dass** die Spannmittel Spannbolzen (23) aufweisen und/oder mit einem mechanisch vorgespannten Federpaket versehen sind, oder dass pneumatisch oder hydraulisch wirkende Spannmittel oder eine direkt als Spannmittel dienende Abdeckmutter (24) vorgesehen ist/sind.

9. Arbeitsorgan (17) nach einem der vorhergehenden Ansprüche, **dadurch gekennzeichnet, dass** die Stirnseiten (3, 4a) der Module (1, 18) mit zumindest je einem Vorsprung (10, 10a) und/oder einer Ausnehmung (12, 12a) versehen sind, welche zum kraft- und formschlüssigen Eingreifen in eine korrespondierende Ausnehmung (12a, 12) bzw. einen Vorsprung (10a, 10) im benachbarten Modul (1, 18) ausgebildet sind.

10. Arbeitsorgan (17) nach Anspruch 9, **dadurch gekennzeichnet, dass** die Vorsprünge (9, 10, 14, 15) klauenartig ausgebildet sind.

11. Arbeitsorgan (17) nach Anspruch 9 oder 10, **dadurch gekennzeichnet, dass** zumindest die eine Stirnseite (3, 4) eines Moduls (1) mit einem in axialer Richtung verlaufenden Vorsprung (9, 10, 14, 15) versehen ist, und dass sich zumindest ein Misch- bzw. Knetflügel (5a, 5h) auf einen Vorsprung (10, 15) hinaus erstreckt.

12. Arbeitsorgan (17) nach einem der Ansprüche 9 bis 11, **dadurch gekennzeichnet, dass** die Vorsprünge (9, 10, 14, 15) bzw. Ausnehmungen (7, 8, 12, 13) kreisringabschnittförmig ausgebildet sind, wobei pro Stirnseite (3, 4) zwei Vorsprünge (9, 10; 14, 15) und zwei Ausnehmungen (7, 8; 12, 13) vorgesehen sind, und wobei sich die Ausnehmungen (7, 8, 12, 13) und die Vorsprünge (9, 10, 14, 15) in radialer Richtung um 40° bis 140° über den Kreisumfang erstrecken.
